# EUROPEAN PATENT SPECIFICATION

(11) **EP 0 967 073 B1**
(45) Date of publication and mention of the grant of the patent: **13.04.2005**
(21) Application number: 99202022.2
(22) Date of filing: 23.06.1999
(51) Int. Cl.: B32B 27/32, B32B 27/34

(54) **Biaxially stretched multilayer film**
Biaxial gestreckte Mehrschichtfolie
Feuille multicouche étirée biaxialement

(30) Priority: 26.06.1998 JP 19510298
(43) Date of publication of application: 29.12.1999
(73) Proprietor: KUREHA KAGAKU KOGYO KABUSHIKI KAISHA, Chuo-ku, Tokyo 103-8552 (JP)
(72) Inventor: Uehara, Tsutomu, Kureha Kagaku Kogyo K.K., Tokyo 103-8552 (JP); Hiramatsu, Takuya, Kureha Kagaku Kogyo K.K., Tokyo 103-8552 (JP); Tobita, Hisanori, Kureha Kagaku Kogyo K.K., Tokyo 103-8552 (JP); Anzai, Mitsuru, Kureha Kagaku Kogyo K.K., Tokyo 103-8552 (JP)
(74) Representative: du Pont, Jeroen

(56) References cited:
- EP-A- 0 214 314
- EP-A- 0 288 972
- WO-A-98/29250
- US-A- 4 532 189
- US-A- 5 695 839

## Description

### FIELD OF THE INVENTION AND RELATED ART

The present invention relates to a biaxially stretched multilayer film having an outer layer comprising a polypropylene resin, particularly a packaging film excellent in balance among required particles, such as heat-resistance, retort-sterilization processability, easy sealability, formability, heat-shrinkability, gas-barrier characteristic, water vapor-barrier characteristic, and flexibility. Herein, the term "film" is used not with an intention of referring to a particularly small thickness but refers to a broader range of thickness including thicknesses which are more likely to be used for "sheets".

The biaxially stretched multilayer film is particularly suitably used as casing films, flow-packaging films, deep-drawing packaging films, etc., for filling and packaging of fluid or semi-fluid food products, such as sausage, and solid food products, such as processed meat and ham.

In recent years, there has been remarkable technical innovation in the field of food packaging, and each food product always requires an optimum packaging material for packaging, storage, transportation etc. Further, in response to, e.g., increased production and requirement for cost reduction, a respective packaging material is also required to exhibit excellent adaptability to an automatic packaging machine.

As casing films, flow packaging films or deep-drawing packaging films, for filling and packaging of fluid or semi-fluid food products inclusive of processed livestock products such as sausage, processed fisheries products such as fish meat sausage, processed agricultural products such as jelly carbohydrate or starch products (inclusive of "konnyaku" and "wirou" in Japanese and bean jelly), and cooked food, and solid food such as processed meat and ham, single-layered films and multilayer films of various synthetic resins have been frequently used. For example, as casing films, there have been frequently used films of resin compositions comprising nylon and polyolefin resin, and multilayer films formed by laminating a layer of nylon and a layer of polyolefin resin.

Among these, a multilayer film formed by laminating a nylon layer and a polyethylene layer (hereinafter abbreviated as "Ny/PE film") is widely used because of good heat-sealing property and gas-barrier characteristic, but is accompanied with a difficulty that it has rather poor flexibility. Moreover, an Ny/PE film is applicable to a symmetrical or self-bonding-type sealing process (wherein the polyethylene layer surface is sealed to itself) but is not applicable to an asymmetrical or so-called back-sealing or envelope-type sealing process (wherein a sealing-boundary is formed between the nylon layer surface and the polyethylene layer surface. Accordingly, an Ny/PE film cannot be applied to an automatic filling and packaging machine equipped with an envelope-type sealing mechanism.

Several proposals have been made regarding polyamide resin compositions for providing single-layered casing films each satisfying various required properties. For example, Japanese Laid-Open Patent Application (JP-A) 4-122732 has proposed a casing film formed from a mixture of nylon 6 and an aromatic copolyamide (hereinafter abbreviated as "nylon 6I/6T") formed by polycondensation of hexamethylenediamine with terephthalic acid and isophthalic acid. However, it has been difficult to stably produce this casing film through the inflation process because bubble puncture is frequently caused due to a high internal stress of a tubular parison during the inflation stretching leading to an elevated air pressure within the bubble under stretching. Moreover, when the casing film is filled with a sausage material, followed by boil-cooking and cooling according to an ordinary process, the resultant product is liable to be accompanied with surface film wrinkles or fail in providing stable shape and size of the product. Further, the casing film is rather stiff and is liable to exhibit poor processing performance during shirring and/or filling.

The above-mentioned tendency and difficulty become more pronounced if the nylon 6I/6T in the above polyamide resin composition is replaced with an aromatic polyamide formed from adipic acid and metaxylylenediamine (hereinafter abbreviated as "nylon MXD6"). More over, a film (or sheet) formed by blowing, when subjected to deep drawing, is liable to fail in exhibiting uniform elongation from a portion corresponding to a bottom corner of the deep drawing mold to a side wall portion, and therefore the application thereof to deep drawing is difficult.

EP-0 288 972 relates to a gas-barrier multilayered structure comprising
(A) at least one layer of a copolyamide composed of
   (a) a dicarboxylic acid component composed of 55 to 70 mole % of an aliphatic dicarboxylic acid component and 45 to 30 mole % of an aromatic dicarboxylic acid component consisting substantially of 20 to 30 mole % of isophthalic acid and 5 to 20 mole % of terephthalic acid and,
   (b) a diamine component composed substantially of a m-xylylenediamine component,
   and
(B) at least one layer of a thermoplastic resin other than the copolyamide.

EP-0 214 314 relates to a heat shrinkable and heat sealable laminated packaging material comprising a heat shrinkable film and a heat shrinkable sealant film laminated on at least one surface of the heat shrinkable film.

Earlier filed, but non-prepublished application WO 98/29250 relates to a single-layer or multilayer packaging film or sheet having at least one layer formed of a polyamide resin composition, wherein the layer formed of the polyamide resin composition is a layer (A) formed of a polyamide resin composition comprising a copolymer nylon (c) composed of an aliphatic nylon (co)polymer component (1) and an aromatic nyon (co)polymer component (2) in a proportion of at least 5 wt. %.

### SUMMARY OF THE INVENTION

A principal object of the present invention is to provide a biaxially stretched multilayer film which is excellent in balance among properties, such as heat-resistance, retort-sterilization processability, easy sealability, formability, heat-shrinkability, gas-barrier characteristic, water vapor-barrier characteristic and softness, required of a packaging material.

Another object of the present invention is to provide a packaged product obtained by forming a casing of a biaxially stretched multilayer film as described above, and filling the casing with a fluid or semi-fluid content material.

According to the present invention, there is provided a biaxially stretched multilayer film, comprising a biaxially stretched laminate film of at least three layers including a pair of outer layers each comprising a thermoplastic resin, and an intermediate layer disposed between the outer layers, wherein
the intermediate layer comprises a polyamide resin composition comprising an aromatic diamine copolymer and an aromatic diamine polymer, and at least one of the outer layers comprises a polypropylene resin.

According to another aspect of the present invention, there is provided a biaxially stretched multilayer film for packaging a processed meat product, comprising a biaxially stretched laminate film of at least three layers including a pair of outer layers each comprising a thermoplastic resin and an intermediate layer disposed between the outer layers, wherein one of the outer layers to be in contact with the processes meat product comprises a resin mixture of 90 - 80 wt. % of a polypropylene resin and 10 - 20 wt. % of a polyethylene resin and has been corona-treated.

According to a further aspect of the present invention, there is provided a biaxially stretched multilayer film, comprising a biaxially stretched laminate film of at least three layers including a pair of outer layers each comprising a thermoplastic resin, and an intermediate layer disposed between the outer layers, wherein
the intermediate layer of a gas-barrier resin comprises an aromatic polyamide (co)polymer, at least one of the outer layers comprises a polypropylene resin, an adhesive layer is disposed between the intermediate layer and said at least one of the outer layers, and said adhesive layer comprises a mixture of a polypropylene resin and a polyethylene resin in a weight ratio of 80/20 to 20/80, at least one of said polypropylene resin and polyethylene resin of the adhesive layer having a functional group.

According to a still further aspect of the present invention, there is provided a packaged product, comprising a casing found of a biaxially stretched multilayer film as described above, and a fluid or semi-fluid material contained in the casing.

In a sense, the present invention corresponds to a selection invention of an invention disclosed in International Patent Publication WO-A 98/29250 which is generically expressed as a single-layer or multilayer packaging film or sheet having at least one layer formed of a polyamide resin composition, wherein the layer formed of the polyamide resin composition is a layer (A) formed of a polyamide resin composition comprising a copolymer nylon (c) composed of an aliphatic nylon (co)polymer component (1) and an aromatic nylon (co)polymer component (2) in a proportion of at least 5 wt. %.

### DETAILED DESCRIPTION OF THE INVENTION

### (Polypropylene resin)

A principal characteristic feature of the biaxially stretched multilayer film according to the present invention is that at least one of a pair of outer layers each of a thermoplastic resin comprises a polypropylene resin.

Herein, the polypropylene resin may include propylene homopolymer (i.e., polypropylene) and a copolymer of at least 90 wt. % of propylene with another olefin having at most 4 carbon atom (i.e., ethylene or butene). The polypropylene resin may be used singly or in the form of a composition containing at least 50 wt. %, preferably at least 60 wt. %, of the polypropylene resin in mixture with another thermoplastic resin in order to constitute at least one of the outer layers.

Preferred examples of the polypropylene resin may include propylene-ethylene copolymer and propylene-ethylene-butane-1 copolymer, which may preferably exhibit a resin melting point of 130 - 155 °C, more preferably 130 - 140 °C.

### (Another thermoplastic resin)

Preferred examples of such another thermoplastic resin may include polyethylene resins inclusive of ethylene homopolymer (i.e., polyethylene) and copolymers of at least 75 wt. %, preferably at least 90 wt. % of ethylene with another olefin having at most 8 carbon atoms. Preferred examples of such a polyethylene resin may include: ethylene homopolymer, such as low-density polyethylene (LDPE), medium-density polyethylene (MDPE), high-density polyethylene (HDPE); and ethylene-α-olefin copolymers, such as linear low-density polyethylene (LLDPE), very low-density polyethylene (VLDPE), and also ethylene copolymers obtained by polymerization in the presence of a metallocene catalyst, including those commercially available (under the trade name of "Affinity" or "Elite") from Dow Chemical Corp. It is preferred to use a polyethylene resin having a density of at least 0.900 g/cm³.

Preferred examples of such another thermoplastic resin other than the above-mentioned polyethylene resin may include: ethylene copolymers having a polar group, such as ethylene-vinyl acetate copolymer (EVA), ethylene-ethyl acrylate copolymer (EEA), ethylene-methyl acrylate copolymer (EMA), ethylene-methacrylic acid copolymer (EMAA), ethylene-acrylic acid copolymer (EAA), and ionomer (IO) resins.

### (Outer layer(s))

If the propylene content in the polypropylene resin constituting the outer layer(s) is below 90 wt. % or the polypropylene resin content in the outer layers) is below 50 wt. %, the effects of using the polypropylene resin in the outer layer(s), such as improvement in heat-resistance and retort-sterilization processability, become scarce.

The outer layer(s) may particularly preferably comprise a mixture of 95 - 70 wt. %, more preferably 90 - 80 wt. %, of polypropylene resin and 5 - 30 wt. %, more preferably 10 - 20 wt. % of polyethylene resin. This is particularly effective for providing an outer layer with a remarkably improved meat adhesion, i.e., adhesion with meat or processed meat product such as ham and sausage, in combination with a corona discharge treatment applied to the outer layer surface. Such a corona discharge treatment is particularly effective in case of packaging of a processed food liable to exhibit poor meat adhesion, such as fish-meat sausage. If the polypropylene resin content exceeds 95 wt. %, the effect of the corona discharge treatment is liable to become insufficient. On the other hand, if the polyethylene resin content is excessive, the co-stretchability with the intermediate layer of the polyamide resin composition is liable to be rather lowered and the retort-sterilization processability is liable to be insufficient.

### (Another outer layer)

It is preferred that the pair of outer layers both comprise the polypropylene resin or a resin composition containing at least 50 wt. % of the polypropylene resin in order to improve the envelope-type sealing performance and the retort-sterilization processability. However, one of the outer layers can be composed of a thermoplastic resin other than the polypropylene resin. The thermoplastic resin used for this purpose may preferably be selected from the above-mentioned examples of resins enumerated in the section of (Another thermoplastic resin) and may also preferably comprise a polyester resin, such as polyethylene terephthalate.

Such another outer layer may preferably constitute an outer layer (so-called outer surface layer) disposed opposite to an outer layer (so-called inner surface layer) contacting a content material, such as a (semi-)fluid material. It is also preferred that this outer (surface) layer is caused to contain at most 1000 ppm, preferably 200 - 800 ppm, of a particulate lubricant, such as silica particles having particle diameters of at most 10 µm, so as to improve the slippability of the resultant multilayer film, thereby providing an improved flow-packaging performance.

### (Intermediate layer)

The intermediate layer may preferably comprise a polyamide resin composition comprising an aromatic diamine copolymer and an aromatic diamine polymer in order to provide appropriate gas-barrier characteristic at high temperatures or during retort-processing, stretchability, and dropping, piercing or shattering strength of the packaged product.

### (Aromatic diamine)

The aromatic diamine providing the aromatic diamine polymer and/or the aromatic diamine copolymer may preferably comprise xylylenediamine, particularly metaxylylenediamine alone, or a mixture of at least 60 wt. %, preferably at least 70 wt. %, of metaxylylenediamine and at most 40 wt. %, preferably at most 30 wt. %, of paraxylylenediamine.

### (Aromatic diamine polymer)

The aromatic diamine polymer may be a polyamide formed by polycondensation of the above-mentioned aromatic diamine with an aromatic or aliphatic dicarboxylic acid, preferably an aliphatic dicarboxylic acid, further preferably an aliphatic dicarboxylic acid having 6 - 12 carbon atoms, such as adipic acid, sebacic acid, suberic acid, undecanedioic acid, or dodecanedioic acid. Specific examples thereof may include: homopolymers, such as polymetaxylene adipamide, polymetaxylylene sebacamide, and polymetaxylylene suberamide; metaxylylene/paraxylylene adipamide copolymer, metaxylylene/paraxylylene pimelamide copolymer, metaxylylene/paraxylylene azelamide/sebacamide copolymer. Among these, polymetaxylene adipamide (MXD 6) is particularly preferred. The aromatic diamine polymer in the intermediate layer is effective for providing the biaxially stretched multilayer film of the present invention with gas-barrier characteristic, among others.

### (Aromatic diamine copolymer)

The aromatic diamine copolymer may comprise a copolycondensation product comprising a condensation unit constituting the above-mentioned aromatic diamine polymer (e.g., metaxylylene adipamide) and at least one species of condensation units of other polyamides, preferably aliphatic polyamides, such as nylon 6, nylon 11, nylon 12, nylon 66, nylon 69 and nylon 610. The aromatic diamine copolymer may preferably contain 4 - 40 wt. % of the condensation unit of the aromatic diamine polymer. Below 4 wt. %, the product multilayer film is caused to have a lower oxygen gas-barrier characteristic, and above 40 wt. %, the multilayer film is liable to have an excessively large rigidity, thus being liable to result in inferior formability, heat-shrinkability and flexibility. Preferred example of the aromatic diamine copolymer may include: nylon 6/12/MXD6 copolymer, nylon 610/MXD 6 copolymer, and nylon 66/610/MXD 6 copolymer.

The aromatic diamine copolymer functions to lower the crystallization speed of the crystalline polyamide resin composition consisting principally of the aromatic diamine polymer, thus facilitating the thermal stretching operation. Thus, the aromatic diamine copolymer contributes to improvements in stretchability, film-formability and high-frequency sealability. The aromatic diamine copolymer further has functions of improving the flexibility of the product multilayer film, thereby improving the fillability with sausage material, etc., and improving the performances in secondary processing, such as shirring, ring processing, film cutting, automatic flow packaging, and deep drawing. The aromatic diamine copolymer also has a function of improving the gas-barrier characteristic of the product multilayer film to some extent. A blend of, e.g., an aliphatic polyamide, such as nylon 6, and an aromatic polyamide, instead of the aromatic diamine copolymer, cannot provide a good balance among the above-mentioned properties.

The polyamide resin composition constituting the intermediate layer may preferably comprise 50 - 99 wt. %, particularly 60 - 95 wt. %, of the aromatic diamine polymer, and 1 - 50 wt. %, particularly 5 - 40 wt. %, of the aromatic diamine copolymer. A smaller content of the aromatic diamine copolymer results in a smaller effect of delaying the crystallization of the polyamide resin composition. On the other hand, a larger content of the aromatic diamine copolymer is liable to result in an excessively soft product multilayer film, so that when a casing of the film is filled with a content material, such as sausage material, the film is liable to be elongated by the filming pressure, thereby failing to provide a uniform product size but resulting in a fluctuation in product shape. Thus, the casing of the film is caused to have inferior size and shape stability.

### (Other polyamide, etc.)

The polyamide resin composition constituting the intermediate layer can contain up to 30 wt. % in total of optional components, in addition to the above-mentioned aromatic diamine polymer and aromatic diamine copolymer, such as up to 20 wt. % of aliphatic polyamide, up to 20 wt. % of non-crystalline polyamide, and up to 30 wt. % of polyolefin resin.

Examples of the aliphatic polyamide may include: nylon 6, nylon 11, nylon 12, nylon 66, nylon 69, nylon 610 nylon 6/66 and nylon 6/12.

The non-crystalline or amorphous nylon is a polyamide which includes an aromatic ring in its main chain and/or side chain, and lacks in crystallinity or has only very scarce crystallinity. More specifically, examples thereof may include: polycondensation products between dicarboxylic acids, such as terephthalic acid and isophthalic acid, and diamines, such as hexamethylene diamine; and copolymers of these. A specific example thereof may be a copolyamide (sometimes indicated as nylon 6I/6T) formed by polycondensation of a dicarboxylic acid mixture of 10 - 50 wt. % of terephthalic acid and 90 - 50 wt. % of isophthalic acid with hexamethylenediamine.

The polyolefin resin optionally incorporated in the intermediate layer may for example comprise a homopolymer of ethylene or α-olefin, such as high-density polyethylene, medium-density polyethylene, low-density polyethylene, or polypropylene; a copolymer of ethylene and α-olefin, such as linear low-density polyethylene (LLDPE), very low-density polyethylene (VLDPE), or a copolymer obtained through polymerization in the presence of a metallocene catalyst (such as one available under a trade name of "Affinity" or "Elite" from Dow Chemical Corp.); ionomer resin, polyamide-modified ionomer resin, ethylene-vinyl acetate copolymer, ethylene-ethyl acrylate copolymer, ethylene-acrylic acid copolymer, ethylene-methyl acrylate copolymer, ethylene-methyl methacrylate copolymer, or ethylene-methacrylic acid copolymer. These polyolefin resins can be used singly or as a combination of two or more species thereof.

As such a polyolefin resin optionally incorporated by mixing into the polyamide resin composition, it is preferred to use an ethylene copolymer, such as ethylene-acrylic acid copolymer or ethylene-methacrylic acid copolymer, or a polyamide-modified ionomer resin, in view of compatibility with the aromatic diamine polymer components.

The polyamide-modified ionomer resin described above refers to a resin obtained through a process of ionizing a copolymer of ethylene and an α,β-unsaturated carboxylic acid with an ion of a metal, such as zinc, lithium, potassium, magnesium, calcium or sodium to form an ionomer, and adding and melt-kneading a polyamide with the ionomer at an elevated temperature of 200 - 350 °C for modification. The polyamide used for the above purpose may for example be nylon 6, nylon 66, nylon 6/66, nylon 6/10, nylon 6/12, nylon 11, nylon 12, or a mixture of two or more species of these. Among these, it is preferred to use nylon 6 or a copolymer thereof.

The inclusion of such a polyolefin resin is effective for reducing the moisture-permeability through the intermediate layer, and therefore that of the product multilayer film, thereby preventing the weight loss of the content material, such as sausage, through the packaging film during the storage, etc., of the packaged product. The polyolefin resin, when used, may ordinarily be added in a proportion of 10 - 30 wt. % of the polyamide resin composition. Below 10 wt. %, the effect of addition thereof is scarce, and above 30 wt. %, the stretchability of the intermediate layer is liable to be inferior and the oxygen-permeability is liable to be increased so that the spoiling by oxidation can be caused in some cases.

### (Polyamide resin composition)

The polyamide resin composition constituting the intermediate layer may be prepared by mixing the above-mentioned ingredients through known processes. For example, a uniform composition can be formed by extruding a mixture of pellets, particles or powders of the respective polymer components through an extruder. The polyamide resin composition can further contain various additives, such as a plasticizer, a stabilizer, a lubricant, an anti-oxidant, a pigment or a dye, as desired, within an extent of not adversely affecting the film properties of the product multilayer film.

### (Adhesive resin layer)

The multilayer film according to the present invention comprises at least the above-mentioned pair of outer layers and intermediate layer and can be produced through simple coextrusion of these three layers. However, it is also possible to produce a multilayer film having better adhesiveness between the respective layers by inserting an adhesive resin layer between the respective layers.

Examples of such an adhesive resin may include: modified polymers obtained, e.g., by grafting an unsaturated acid-based modifier inclusive of an unsaturated acid, such as maleic acid, fumaric acid or acrylic acid, or an anhydride or ester thereof, onto base polymers, e.g., homopolymers or copolymers of olefins, such as polyethylene resins (inclusive of copolymers with α-olefins, such as LLDPE and VLDPE), polypropylene, polybutene, copolymers between monomers of these resins, ionomer resins, ethylene-acrylic acid copolymers, and ethylene-vinyl acetate copolymer, and a mixture of such a modified polymer and olefin base polymers as described above.

It is particularly preferred to use a layer of an adhesive resin comprising a mixture of 20 - 80 wt. % of polypropylene resin and 80 - 20 wt. % of polyethylene resin, at least one of which has been modified with an unsaturated acid-based modifier, such as maleic acid, because of a strong adhesion and a sufficient heat-resistance durable against retort-sterilization. If the content of the (modified) polypropylene resin is excessive, the adhesive layer is liable to cause peeling at a folding part of the casing or a folding part at the time of shirring between the polypropylene resin layer and the polyamide resin layer. On the other hand, if the content of the (modified) polyethylene resin is excessive, peeling is liable to occur between the polypropylene resin layer and the polyamide resin layer at the time of stretching to result in minute cracks in these layers leading to a puncture of the inflation bubble for the stretching.

### (Other resin layers)

The multilayer film according to the present invention can further contain another resin layer or an additional resin layer in addition to the above-mentioned resin layers. For example, it is possible to dispose a gas-barrier resin layer of saponified ethylene-vinyl acetate copolymer (EVOH) or nylon MXD 6, as desired, adjacent to the above-mentioned intermediate layer via or without via an adhesive resin layer.

### (Film production)

The multilayer film according to the present invention may be produced any process which is not particularly limited and may be co-extrusion or successive lamination, e.g., according to the T-die process or inflation process. The inflation process may ordinarily be adopted. The layer-forming melt-resin temperature may be: ordinarily 160 - 220 °C, preferably 180 - 200 °C for the polypropylene resin constituting at least one outer layer; and ordinarily at most 300 °C, preferably 240 - 280 °C, further preferably 250 - 270 °C for the polyamide resin constituting the intermediate layer. A yet-unstretched film obtained through the T-die process may be biaxially stretched simultaneously or successively according to the tenter process at a stretching temperature of, e.g., at most 130 °C, which is generally below the resin melting temperature of the polypropylene resin. A tubular parison obtained through inflation process is biaxially stretched by a bubble of air blown and trapped therein at a similar stretching temperature. The stretching ratio is ordinarily 2.0 - 10.0 times, preferably 2.2 - 8.0 times, further preferably 2.2 - 6.0 times, in both longitudinal and transverse directions (MD and TD). By the stretching, appropriate degrees of heat-shrinkability and size stability, such as crepe resistance, can be attained.

### (Laminate structure)

Through a production process as described above, the biaxially stretched multilayer film according to the present invention is formed as a multilayer film including the following component layers (inclusive of optional layers) having respectively indicated thicknesses so as to provide a total thickness of 10 - 250 µm, preferably 15 - 200 µm:
First outer layer (outer surface layer in the case of a tubular state): 5 - 100 µm, preferably 5 - 80 µm,
Intermediate layer: 2 - 50 µm, preferably 2 - 20 µm,
Gas-barrier layer (optional): 1 - 20 µm, preferably 2 - 10 µm,
Second outer layer (inner surface layer in the case of a tubular state): 5 - 100 µm, preferably 5 - 80 µm,
Adhesive resin layer (optional): 0.5 - 30 µm, preferably 1 - 20 µm.

### (Properties)

In the field of processed meat product packaging, the occurrence of wrinkles on the packaged product of, e.g., sausage, is disliked from the viewpoint of merchandise aesthetics. To prevent the occurrence of wrinkles, it is necessary that the packaging film is kept under tension by heat-shrinkage of the film during boil-cooking or sterilization processing. The stretched film according to the present invention can exhibit shrinkability (hot-water shrinkability) of at least 5 %, preferably at least 8 %, further preferably at least 10 %, in each of the longitudinal (MD) and transverse (TD) directions when immersed in hot water at 80 °C.

If the multilayer film according to the present invention has a hot-water shrinkability at 80 °C of below 5 %, a casing of the film can leave wrinkles on the packaged product when it is filled with fluid or semi-fluid sausage material, followed by boil-cooking or heat-sterilization.

As a measure of size stability of a film, a hot-water creep elongation under a load of 1 kg/mm² at 80 °C for 10 second may be adopted. The stretched film according to the present invention may preferably exhibit a hot-water creep elongation of at most 20 %, preferably at most 18 %. If the hot-water creep elongation is excessively large, the size of a packaged product after filling and cooking of e.g., sausage, is liable to be fluctuated. For the measurement of the hot-water creep elongation, a sample film having a width of 20 mm and a length of 100 mm is immersed in water at 80 °C for 10 sec. under a load of 1kg/mm² to measure a percent (%) elongation of the length.

The film according to the present invention may preferably exhibit a haze value of at most 20 %, so that a content material, such as sausage, can be easily seen through the packaging film.

The multilayer film according to the present invention may preferably exhibit an oxygen permeability of at most 200 cm³ (NTP)/m².day.atm, more preferably at most 135 cm³ (NTP)/m².day.atm, as measured in an environment of 30 °C and 80% RH (relative humidity), and a moisture permeability of at most 70 g/m².day as measured in an environment of 40 °C and 90 %RH. These properties are effective in storage of packaged food product for a long period for preventing the spoiling due to oxidation and weight-loss due to moisture permeation of the content material, and for keeping the flavor or the content material.

The multilayer film according to the present invention exhibits an excellent high-frequency sealability or weldability. While a large number of proposals have been made on films of various resin compositions comprising polyamides and polyolefin resins, few reference has been made onto high-frequency sealability of such films. As a result of our study on the sealability of various films, a film of polyamide alone, e.g., a nylon 6 film, when subjected to high-frequency sealing by means of an automatic filling and packaging machine (e.g., "KAP" available from Kureha Kagaku Kogyo K.K., for sausage product, etc.), failed in exhibiting good sealability due to the occurrence of discharge at the sealing part. On the other hand, a multilayer film according to the present invention comprising outer layers of polypropylene resin and an intermediate layer of polyamide resin composition allows a discharge-free continuous stable sealing when subjected to high-frequency sealing by means of such an automatic filling and packaging machine equipped with a high-frequency sealing system. The multilayer film according to the present invention exhibits not only such good high-frequency sealability but also good heat-sealability and ultrasonic sealability.

The multilayer film according to the present invention is suitably used as a casing film. The multilayer film according to the present invention exhibits good film-formability and stretchability during its film production process and also exhibits appropriate degrees of softness, hot water-shrinkability, anti-creep resistance, toughness, gas-barrier characteristic, size-stability and adaptability to automatic packaging machines, in combination, so that it is particularly suitable for use as a packaging material for filing and packaging of fluid, semifluid or solid food products inclusive of processed livestock products, such as sausage, ham and processed meat: fisheries products, such as fish meat sausage; processed agricultural products, such as jelly carbohydrate products (inclusive of "konnyaku" and "wirou" in Japanese and bean jelly), and cooked food.

Prior to filling with a content material comprising a processed meat product, such as sausage or ham, it is preferred to subject an outer layer surface of the film contacting the content material to a corona discharge treatment so as to provide an improvement in so-called "meat adhesion", i.e., adhesion with the meat product, thereby preventing the generation of stagnant juice between the film and the contents, for the purpose of not only improving the appearance of the packaged product but also maintaining the quality of the contents.

The corona discharge treatment may be effected by using a corona discharger equipped with a high-frequency power supply comprising a high-frequency oscillator and a high-voltage transformer, applying a film onto a silicone-coated treating roller, and exposing the film to corona discharge by application of an AC power of at most 4 kW with a voltage of at most 18 kilo-volts and a frequency of 5 - 120 kHz in an alternating waveform, preferably sinusoidal waveforms of voltage and current, between the discharge electrode and the treating roller, thereby providing the treated film surface with a surface tension of at least 34 dyne/cm², more preferably at least 36 dyne/cm².

The multilayer film according to the present invention is suitably applicable not only to the symmetrical or self-bonding-type sealing process but also to a back-sealing or asymmetrical process (i.e., a so-called envelope-type sealing process wherein a pair of outer layers are overlapped to contact each other at their edge portions and sealed for bonding with each other). For example, a tubular casing having a lay-flat width of at most 260 mm, preferably 15 - 160 mm, and a sealing width of 0.1 - 15 mm, may be formed by back-sealing and suitably filled with a (semi-)fluid content material, followed by hermetic sealing by heat-sealing at both longitudinal ends of the casing to provide a packaged product.

### [Examples]

Hereinbelow, the present invention will be described more specifically based on Examples and Comparative Examples. Some physical properties described herein are based on values measured according to the following methods.

### (1) Oxygen permeability

Measured by using "MOCON OXTRAN-2/20" available from Modern Control Co. according to ASTM D3985-81 under the conditions of 30 °C and 80 %RH.

### (2) Moisture permeability

Measured by using "PERMATRAN-W3/31" available from Modern Control Co. under the conditions of 40 °C and 90 %RH.

### (3) Inter-layer adhesion

A product film is cut into two sample strip each of 15 mm in width (TD) and 100 mm in length (MD) and one longitudinal end of each sample strip is subjected to partial peeling by using a cutter edge either between outermost layer // core layer or between innermost layer // core layer. Each strip is subjected to measurement of T-form peeling strength by using the peeled end to measure an outermost layer // core layer adhesion strength and a core layer // innermost layer adhesion strength, reflectively, for each sample laminate film.

### (4) Shrinkability

A sample film is immersed for 3 seconds in hot water at 80 °C, followed by measurement of shrinkages (%) in MD and TD directions.

### (5) Tensile modulus

A product film is cut into two sample strips each of 20 mm in width (TD or MD) and 100 mm in length (MD or TD). Each sample strip is subjected to a tensile test at a tensile speed of 10 mm in its longitudinal direction by using "TENSILON RTM-100" available from Toyo Boldwin K.K., to measure a stress at 1 % strain as a tensile modulus in MD or TD direction.

### (6) Meat adhesion (Film peeling force)

A packaged sausage product is used for evaluation of meat adhesion by using a tester ("FUDOH RHEO METER", available from Rheotech K.K.). The casing film is cut in a width of 3 cm perpendicular to the length and longitudinally cut in two lines in the longitudinal direction from two ends of the 3 cm-wide cut. Then, the casing is preliminarily peeled longitudinally in ca. 2 cm, and the peeled portion is chucked. Then, the sausage is pierced through from its circumference through its central axis to an opposite circumference by a cylindrical bar-shaped shaft so as to allow the sausage to rotate while keeping the direction of peeling of the film to be always perpendicular during the measurement. Under this condition, the film is peeled in a length of ca. 3 cm at a speed of 6 cm/min. An average of the peeling force during the peeling is measured for evaluating the meat adhesion.

### (7) Crystal melting point (Tm)

A crystal melting point of a resinous material is measured by using a differential scanning colorimeter ("DSC-7", available from Perkin-Elmer Inc.). A sample resin weighed at 5 - 10 mg is once melted and held for 2 min. at a temperature higher by 40 °C than the melting point at that time, followed by rapid cooling to 0 °C at a rate of 200 °c/min. Then, the sample is heated at a rate of 20 °C/min. and a melting peak temperature during the heating is measured as the crystal melting point.

### Example 1

A multilayer film having a laminate structure including 5 layers of outermost layer/adhesive layer/core layer/adhesive layer/innermost layer was prepared from the following starting resin materials for the respective layers.

Outer layer & Innermost layer: a mixture of 90 wt. % of ethylene/propylene/butene-1 (2/93/5 by weight) copolymer ("SUMITOMO NOBULENE FL851", Sumitomo Kagaku K.K., abbreviated as "PP"; melting point (Tm) = 139 °C, density (d) = 0.90, melt index (MI) = 6 g/10 min., Vicat softening point (Tv) = 128 °C) and 10 wt. % of metallocene-catalyzed polyethylene ("Elete 5100", Dow Chemical Co. abbreviated as "PE"; Tm = 121 °C, d = 0.92, MI = 0.85 g/10 min., Tv = 107 °C).

Core layer: a mixture of 95 wt. % of nylon MXD6 ("POLYAMIDE MXD6 #6007", Mitsubishi Kagaku K.K.; Tm = 240 °C, Tg = 75 °C, d = 1.22) and 5 wt. % of nylon 66/610/MXD6 copolymer ("GRILON BM-18SBH"; available from EMS-Chemie A.G.; Tm = 181 °C, Tg = 57 °C, d = 1.12; abbreviated as "M-PA")

Adhesive layer: a mixture of 50 wt. % of modified polypropylene resin ("MODIC P504V", available from Mitsubishi Kagaku K.K.; abbreviated as "M-PP"; Tm = 140 °C; d = 0.89, MI = 4 g/10 min., Tv = 100 °C) and 50 wt. % of modified LLDPE ("MODIC OM-101", Mitsubishi Kagaku K.K.; abbreviated as "M-PE"; Tm = 120 °C, d = 0.93, MI = 3.2 g/10 min., Tv = 56 °C)

The respective resin materials were co-extruded at a resin temperature of 250 °C through four extruders (having die sizes of 40 mm in diameter for each of the outermost, innermost and core layers, and 30 mm in diameter for the adhesive layers) and an annular die, and then quenched with showering water at 10 °C, to form a parison having a laminate structure including 5 layers of 4 resin species and having a thickness of 850 mm and a lay-flat width of 70 mm.

Then, the parison was re-heated by a far infrared heater to a surface temperature of 150 °C and biaxially stretched at stretching ratios of 4.5/4.5 times in MD/TD directions by the inflation process to form a tubular film having layer thicknesses of 15/2/8/2/15 µm and a total thickness of 42 µm. Then, the film was heat-treated at 140 °C in terms of a film surface temperature measured by an infrared thermometer, thereby obtaining a multilayer film according to the present invention.

The resins (and thicknesses) of the respective layers are summarized from the first (outermost) to fifth (innermost) layers as follows:

| | Outermost | Ad (adhesive) | Core | Ad | Innermost |
|---|---|---|---|---|---|
| Resin | PP+PE | M-PP+M-PE | MXD6+M-PA | M-PP+M-PE | PP+PE |
| Ratio (wt.) | 90+10 | 50+50 | 95+5 | 50+50 | 90+10 |
| Thickness (µm) | 15 | 2 | 8 | 2 | 15 |
| Total thickness = 42 µm | | | | | |

The oxygen permeability, moisture permeability, inter-layer adhesion, shrinkability and tensile modulus of the multilayer film as measured according to the above-described methods are summarized in Table 1 appearing hereinafter together with those of the following Examples and Comparative Examples.

### Examples 2 and 3

Multilayer films according to the present invention were prepared in the same manner as in Example 1 except for changing the weight ratios between MXD6 and M-PA constituting the core layers as follows.

| | MXD6 + M-PA |
|---|---|
| (Example 2) | 90 + 10 |
| (Example 3) | 80 + 20 |

### Example 4 (not according to the present invention)

A multilayer film having a 5-layer structure of PP/M-PP/MXD6(95)+M-PA(5)/M-PP/PP was prepared through a process similar to the one in Example 1 except for using a different surface layer resin (i.e., PP instead of the mixture of PP(90)+PE(10)) and a different adhesive layer resin (i.e., M-PP instead of the adhesive mixture of M-PP(50)+M-PE(50)).

### Example 5

A multilayer film having a 5-layer structure of PP/M-PP(50)+M-PE(50)/MXD6/M-PP(50)+M-PE(50)/PP was prepared through a process similar to the one in Example 1 except for using a different surface layer resin (i.e., PP instead of the mixture of PP(90)+PE(10)) and a different core layer resin (i.e., MXD6 above instead of the mixture of MXD6(95)+M-PA(5)).

### Comparative Examples 1 - 2

Biaxially stretched multilayer film each having a 5-layer structure of PP/Ad/MXD6/AD/PP were tried to be prepared in the same thickness ratio and in a similar manner as in Example 1 while using the modified polypropylene resin (M-PP, "MODIC P504V", Mitsubishi Kagaku K.K.) as Ad (adhesive) in Comparative Example 1 and the modified LLDPE (M-PE, "MODIC OM 101", Mitsubishi Kagaku K.K.) was Ad (adhesive) in Comparative Example 2.

A multilayer film could be obtained in Comparative Example 1. In Comparative Example 2, however, the bubble punctured during the inflation stretching due to partial peeling between layers, thus failing to provide a multilayer film.

The properties of only the film of Comparative Example 1 are shown in Table 1 below.

**Table 1**

| Ex. or Comp. Ex. | Thickness (µm) | 1) Oxygen permeability | 2) Moisture permeability | 3) Interlayer adhesion | 4) Shrinkage (%) (MD/TD) | 5) Tensile modulus (MPa) (MD/TD) |
|---|---|---|---|---|---|---|
| Ex. 1 | 42 | 30 | 11 | 57/53 | 8/12 | 1.5/1.5 |
| Ex. 2 | 42 | 31 | 10 | 68/65 | 7/13 | 1.4/1.4 |
| Ex. 3 | 42 | 32 | 8 | 70/65 | 8/13 | 1.3/1.3 |
| Ex. 4* | 42 | 30 | 10 | 35/35 | 7/12 | 1.6/1.6 |
| Ex. 5 | 42 | 28 | 10 | 40/45 | 7/11 | 1.5/1.6 |
| Comp. Ex. 1 | 42 | 28 | 10 | 17/12 | 7/12 | 1.5/1.6 |

| | | | | | | |
|---|---|---|---|---|---|---|
| * not according to the present invention | | | | | | |

### Example 6

The multilayer film of Example 3 was used for providing casings by back-seaming and subjected to automatic filling and packaging of pasty livestock meat sausage material by an automatic packaging machine ("KAP2000", available from Kureha Kagaku Kogyo K.K.) to produce 100 projectile-form packaged sausage products each measuring ca. 22 mm in diameter and 140 mm in length and having a weight of ca. 55 g. The packaged sausage products were then subjected to a retort sterilization treatment at 120 °C for 15 min. with steam at a pressure of 2 kg/cm.gauge. During the retort sterilization treatment, the packaged sausage products caused no puncture (i.e., a puncture (occurrence) rate of 0 %), and the sausage products exhibited no spoiling and caused only a small weight loss of 0.18 % after two weeks of storage at room temperature.

### Example 7

The multilayer film of Example 4 was used for providing casings and subjected to automatic filling and packaging of livestock meat sausage material, followed by retort sterilization in the same manner as in Example 6. As a result, the packaged sausage products exhibited a puncture rate of 0 % during the retort sterilization, and the sausage products exhibited no spoiling and caused only a weight loss of 0.17 % after two weeks of storage at room temperature.

### Example 8

The multilayer film of Example 5 was used for providing casings and subjected to automatic filling and packaging of livestock meat sausage material, followed by retort sterilization in the same manner as in Example 6. As a result, the packaged sausage products exhibited a puncture rate of 5 % during the retort sterilization, and the sausage products exhibited no spoiling and caused only a weight loss of 0.17 % after two weeks of storage at room temperature.

### Comparative Example 3

The multilayer film of Comparative Example 1 was used for providing casings and subjected to automatic filling and packaging of livestock meat sausage material, followed by retort sterilization in the same manner as in Example 6. As a result, the packaged sausage products exhibited a puncture rate of 40 % during the retort sterilization.

### Example 9

The multilayer film of Example 3 was first subjected to a corona discharge treatment onto its surface contacting the content sausage material to provide a treated surface exhibiting a surface tension of 36 dyne/cm². The film thus treated was used for filling and packaging of fish meat sausage material followed by retort sterilization, in the same manner as in Example 6. The resultant fish meat sausage products exhibited a puncture rate of 0 % during the retort sterilization, no spoiling of the sausage meat and a low weight loss of 0.15 % after the storage for 2 weeks at room temperature, and also good meat adhesion as indicated by a film peeling force of 100 g/3 cm-width at a peeling speed of 6 cm/min.

As described above, the present invention provides a biaxially stretched multilayer film which not only is excellent in balance among formability, heat-shrinkability, easy-sealability, gas-barrier characteristic, moisture-barrier characteristic and softness but also exhibits excellent heat-resistance suitable for retort sterilization. Particularly, the multilayer film is suitably used for providing a casing to be filled with (semi-)fluid food products, such as fish meat, livestock meat and processed products of these, thereby providing a packaged product excellent in both appearance and strength.

## Claims

1. A biaxially stretched multilayer film, comprising a biaxially stretched laminate film of at least three layers including a pair of outer layers each comprising a thermoplastic resin, and an intermediate layer of a gas-barrier resin disposed between the outer layers, wherein the intermediate layer comprises an aromatic diamine (co)polymer at least one of the outer layers comprises a polypropylene resin, an adhesive layer is disposed between the intermediate layer and said at least one of the outer layers, and said adhesive layer comprises a mixture of a polypropylene resin and a polyethylene resin in a weight ratio of 80/20 to 20/80, at least one of said polypropylene resin and polyethylene resin of the adhesive layer having a functional group.

2. A multilayer film according to claim 1, wherein the intermediate layer of a gas barrier resin comprises a polyamide resin composition comprising an aromatic diamine copolymer and an aromatic diamine polymer.

3. A multilayer film according to Claim 2, wherein said polyamide resin composition comprises 1 - 50 wt. % of the aromatic diamine copolymer and 99 - 50 wt. % of the aromatic diamine polymer.

4. A multilayer film according to any of the preceding claims, wherein said aromatic diamine (co)polymer comprises a xylylene diamine (co)polymer.

5. A multilayer film according to any of the preceding Claims , wherein both of the outer layers comprises a polypropylene resin.

6. A multilayer film according to any one of the preceding Claims, wherein at least one of the outer layers comprises a mixture of a polypropylene resin and a polyethylene resin.

7. A multilayer film according to Claim 6, wherein the mixture of said at least one of the outer layers contains 5 - 30 wt. % of the polyethylene resin.

8. A multilayer film according to any of the preceding claims, wherein one of the outer layers to be in contact with a processes meat product comprises a resin mixture of 90 - 80 wt. % of a polypropylene resin and 10 - 20 wt. % of a polyethylene resin and has been corona-treated with respect to its exposed surface.

9. A multilayer film according to any of Claims 1 - 8, which is heat-shrinkable.

10. Use of the multilayer film according to any of the preceding claims for packaging a processed meat product.

11. A packaged product, comprising a casing formed of a biaxially stretched multilayer film according to any of Claims 1 - 9, and a fluid or semi-fluid material contained within the casing.

12. A packaged product according to Claim 11, wherein the casing has been formed through back-sealing.

13. A packaged product according to Claim 12, wherein the casing has two longitudinal ends which have been both hermetically sealed.

14. A packaged product according to Claim 13, wherein the fluid or semi-fluid material has been automatically contained and packaged within the casing by a packaging machine.

15. A packaged product according to any of Claims 12 - 14, wherein the casing has a lay-flat width of 15 - 160 mm.

## Patentansprüche

1. Eine biaxial verstreckte Mehrschichten-Folie, die eine biaxial verstreckte Laminatfolie aus mindestens drei Schichten umfasst, die ein Paar von äußeren Schichten, die jeweils ein thermoplastisches Harz umfassen, und eine Zwischenschicht aus einem Gasbarriereharz umfassen, die zwischen den äußeren Schichten angeordnet ist, wobei die Zwischenschicht ein aromatisches Diamin-(Co)polymer umfasst, mindestens eine der äußeren Schichten ein Polypropylenharz umfasst, eine Klebeschicht zwischen der Zwischenschicht und der mindestens einen der äußeren Schichten angeordnet ist, und die Klebeschicht ein Gemisch aus einem Polypropylenharz und einem Polyethylenharz in einem Gewichtsverhältnis von 80/20 bis 20/80 umfasst, wobei mindestens eines des Polypropylenharzes und des Polyethylenharzes der Klebeschicht eine funktionelle Gruppe aufweist.

2. Mehrschichten-Folie nach Anspruch 1, bei der die Zwischenschicht aus einem Gasbarriereharz eine Polyamidharzzusammensetzung umfasst, die ein aromatisches Diamin-Copolymer und ein aromatisches Diaminpolymer umfasst.

3. Mehrschichten-Folie nach Anspruch 2, bei der die Polyamidharzzusammensetzung 1 bis 50 Gew.-% des aromatischen Diamin-Copolymers und 99 bis 50 Gew.-% des aromatischen Diaminpolymers umfasst.

4. Mehrschichten-Folie nach einem der vorstehenden Ansprüche, bei der das aromatische Diamin-(Co)polymer ein Xylylendiamin-(Co)polymer umfasst.

5. Mehrschichten-Folie nach einem der vorstehenden Ansprüche, bei der beide äußere Schichten ein Polypropylenharz umfassen.

6. Mehrschichten-Folie nach einem der vorstehenden Ansprüche, bei der mindestens eine der äußeren Schichten ein Gemisch aus einem Polypropylenharz und einem Polyethylenharz umfasst.

7. Mehrschichten-Folie nach Anspruch 6, bei der das Gemisch der mindestens einen der äußeren Schichten 5 bis 30 Gew.-% des Polyethylenharzes umfasst.

8. Mehrschichten-Folie nach einem der vorstehenden Ansprüche, bei der eine der äußeren Schichten, die mit einem verarbeiteten Fleischprodukt in Kontakt ist, ein Harzgemisch aus 90 bis 80 Gew.-% eines Polypropylenharzes und 10 bis 20 Gew.-% eines Polyethylenharzes umfasst und bezüglich der kontaktierenden Oberfläche einer Koronabehandlung unterworfen worden ist.

9. Mehrschichten-Folie nach einem der Ansprüche 1 bis 8, die wärmeschrumpfbar ist.

10. Verwendung einer Mehrschichten-Folie nach einem der vorstehenden Ansprüche zur Verpackung eines verarbeiteten Fleischprodukts.

11. Ein verpacktes Produkt, das eine Verpackung, die aus einer biaxial verstreckten Mehrschichten-Folie nach einem der Ansprüche 1 bis 9 und einem fluiden oder halbfluiden Material ausgebildet ist, das innerhalb der Verpackung vorliegt, umfasst.

12. Verpacktes Produkt nach Anspruch 11, bei dem die Verpackung durch Rückseitenversiegeln gebildet worden ist.

13. Verpacktes Produkt nach Anspruch 12, bei dem die Verpackung zwei longitudinale Enden aufweist, die beide hermetisch versiegelt worden sind.

14. Verpacktes Produkt nach Anspruch 13, bei dem das fluide oder halbfluide Material durch eine Verpackungsmaschine automatisch in die Verpackung eingebracht und darin verpackt worden ist.

15. Verpacktes Produkt nach einem der Ansprüche 12 bis 14, bei dem die Verpackung eine flachliegende Breite von 15 bis 160 mm aufweist.

## Revendications

1. Film multicouche étiré biaxialement, comprenant un film stratifié étiré biaxialement d'au moins trois couches, dont une paire de couches extérieures comprenant chacune une résine thermoplastique et une couche intermédiaire en une résine faisant barrière au gaz et interposée entre les couches extérieures, au moins l'une des couches extérieures comprenant une résine de polypropylène, une couche adhésive est interposée entre la couche intermédiaire et la au moins une des couches extérieures et la couche adhésive comprend un mélange d'une résine de propylène et d'une résine de polyéthylène en un rapport en poids de 80/20 à 20/80, au moins l'une de la résine de polypropylène et de la résine de polyéthylène de la couche adhésive ayant un groupe fonctionnel dans lequel la couche intermédiaire comprend un (co) polymère de diamine aromatique.

2. Film multicouche suivant la revendication 1, dans lequel la couche intermédiaire d'une résine formant barrière au gaz comprend une composition de résine de polyamide comprenant un copolymère de diamine aromatique et un polymère de diamine aromatique.

3. Film multicouche suivant la revendication 2, dans lequel la composition de résine de polyamide comprend de 1 à 50 % en poids du copolymère de diamine aromatique et de 99 à 50 % en poids du polymère de diamine aromatique.

4. Film multicouche suivant l'une quelconque des revendications précédentes, dans lequel le (co) polymère de diamine aromatique comprend un (co) polymère de xylylène diamine.

5. Film multicouche suivant l'une quelconque des revendications précédentes, dans lequel les deux couches extérieures comprennent une résine de polypropylène.

6. Film multicouche suivant l'une quelconque des revendications précédentes, dans lequel au moins l'une des couches extérieures comprend un mélange d'une résine de polypropylène et d'une résine de polyéthylène.

7. Film multicouche suivant la revendication 6, dans lequel le mélange de la au moins une des couches extérieures contient de 5 à 30 % en poids de la résine de polyéthylène.

8. Film multicouche suivant l'une quelconque des revendications précédentes, dans lequel l'une des couches extérieures à mettre en contact avec un produit carné traité comprend un mélange de résine constitué de 90 à 80 % en poids d'une résine de polypropylène et de 10 à 20 % en poids d'une résine de polyéthylène et a été traitée par effet couronne sur sa surface exposée.

9. Film multicouche suivant l'une quelconque des revendications 1 à 8, qui est thermorétractable.

10. Utilisation du film multicouche suivant l'une quelconque des revendications précédentes pour emballer un produit carné traité.

11. Produit emballé comprenant une enveloppe formée d'un film multicouche étiré biaxialement suivant l'une quelconque des revendications 1 à 9 et une matière fluide ou semi-fluide contenue dans l'enveloppe.

12. Produit emballé suivant la revendication 11, dans lequel l'enveloppe a été formée par rétroscellement.

13. Produit emballé suivant la revendication 12, dans lequel l'enveloppe a deux extrémités longitudinales qui ont été scellées toutes deux hermétiquement.

14. Produit emballé suivant la revendication 13, dans lequel la matière fluide ou semi-fluide a été mise et emballée automatiquement dans l'enveloppe par une machine d'emballage.

15. Produit emballé suivant l'une quelconque des revendications 12 à 14, dans lequel l'enveloppe a une largeur à plat de 15 à 160 mm.
